# EUROPÄISCHE PATENTSCHRIFT

(11) **EP 0 521 975 B1**
(45) Veröffentlichungstag und Bekanntmachung des Hinweises auf die Patenterteilung: **09.03.1994**
(21) Anmeldenummer: 91906812.2
(22) Anmeldetag: 27.03.1991
(51) Int. Cl.: B65F 3/02, G01F 23/28

(54) **VERFAHREN ZUM MENGENBEZOGENEN ENTSORGEN VON HAUSHALTS- UND GEWERBEMÜLL UND MENGENBEZOGENES ENTSORGUNGSYSTEM FÜR DERARTIGEN MÜLL**
PROCESS FOR QUANTITY-RELATED DISPOSAL OF HOUSEHOLD AND INDUSTRIAL REFUSE AND QUANTITY-RELATED DISPOSAL SYSTEM FOR SAID REFUSE
PROCEDE ET SYSTEME QUANTITATIFS D'EVACUATION DE DECHETS MENAGERS ET INDUSTRIELS

(30) Priorität: 29.03.1990 DE 4010065
(43) Veröffentlichungstag der Anmeldung: 13.01.1993
(73) Patentinhaber: SPERNER, Franz, D-72654 Neckartenzlingen (DE)
(72) Erfinder: SPERNER, Franz, D-72654 Neckartenzlingen (DE)
(74) Vertreter: Dreiss, Fuhlendorf, Steimle & Becker, Patentanwälte
(86) Internationale Anmeldenummer: EP9100598
(87) Internationale Veröffentlichungsnummer: WO9114639

(56) Entgegenhaltungen:
- DE-A- 3 336 210
- DE-A- 3 405 997
- DE-A- 3 447 648
- DE-A- 3 614 991
- DE-A- 3 703 557
- DE-B- 2 649 075

## Beschreibung

Die vorliegende Erfindung bezieht sich auf ein Verfahren zum mengenbezogenen Entsorgen von Haushalts-, Gewerbe- und dgl. Müll nach dem Oberbegriff des Anspruchs 1 bzw. auf ein mengenbezogenes Entsorgungssystem für Haushalts-, Gewebe- und dgl. Müll nach dem Oberbegriff des Anspruchs 2.

Derzeit werden bei Haushaltsmüll die zu bezahlenden Müllgebühren bspw. vom Landratsamt nach der gemeldeten Personenzahl einer Wohnung oder eines Hauses festgelegt und jeweils eine sogenannte Großmülltonne von 80 l oder 120 l oder 240 l Inhalt einer bestimmten Anzahl von Personen zugeordnet. Die entsprechende Größe des Müllgefäßes ist damit festgelegt. Jedoch hat in nachteilhafter Weise die Menge des anfallenden Haushaltsmülls auf die Gebühren keinerlei Einfluß, soweit der Anfall des Haushaltsmülls in dem durch das Volumen des bereitgestellten Müllgefäßes vorbestimmten Rahmen verbleibt. Entsprechendes gilt für den Gewerbemüll in den dafür bereitgestellten größeren Müllcontainern. Somit fruchten all die vielen Aufforderungen zur Reduzierung der Müllberge nur wenig bzw. vershallen ungehört. Die Folge davon ist, daß die Müllberge wachsen und wachsen.

Es ist zwar in "Müll und Abfall", Heft 2, Februar 1990, S. 99 darauf hingewiesen worden, daß ein Modellversuch alsbald gestartet werden soll, nach welchem der anfallende Müll nach seinem tatsächlichen Gewicht und nicht mehr pauschal nach dem Volumen des Müllgefäßes bezahlt werden soll. Hierzu sollen die Müllfahrzeuge mit einer speziellen Waage ausgestattet werden. Wie dies im einzelnen verfahrensmäßig und vorrichtungsmäßig erfolgen kann, ist beispielsweise DE-A- 3 405 997 oder DE-A- 3 447 648 zu entnehmen. Da erfahrungsgemäß die Kapazität der im Betrieb befindlichen Müllfahrzeuge nicht durch das zu transportierende Gewicht sondern trotz Volumenverkleinerungseinrichtungen durch den Rauminhalt des Containers des Müllfahrzeuges begrenzt ist, ist bei diesem Vorschlag nachteilig, daß die Müllfahrzeuge nach wie vor aufgrund ihrer begrenzten volumenmäßigen Aufnahmekapazität während eines Entleerungstages entweder zwischendurch zur Mülldeponie fahren müssen oder nur einen kleineren Wohn- oder Gewerbebezirk abfahren können. Nachteilig hierbei ist außerdem, daß der Benutzer nicht davon abgehalten wird, gerade sperrigen Abfall, wie zu kompostierende Gartenabfälle oder einer gesonderten Entsorgung zuzuführende Kartonagen, Glasflaschen und dgl. zum üblichen Haushaltsmüll zu geben, da solche im allgemeinen leichtgewichtig sind.

**Aufgabe** der vorliegenden Erfindung ist es deshalb, ein Verfahren zum mengenbezogenen Entsorgen von Müll bzw. ein mengenbezogenes Entsorgungssystem für Müll der eingangs genannten Art zu schaffen, das den Benutzer zu einer Verringerung des Müllanfalls anhält und dabei gleichzeitig in schneller und einfacher Weise durchführbar ist.

Zur Lösung dieser Aufgabe sind bei einem Verfahren zum mengenbezogenen Entsorgen von Müll der genannten Art die im Anspruch 1 angegebenen Merkmale und bei einem mengenbezogenen Entsorgungssystem für Müll der genannten Art die im Anspruch 2 angegebenen Merkmale vorgesehen.

Durch dieses mengenbezogene Entsorgen auf der Grundlage der Volumenbestimmung und nicht der Gewichtsbestimmung ist es dem Benutzer möglich, einen direkten Einfluß auf seine Müllgebühren durch Reduzierung des Müllanfalls zu nehmen, zumal sich das anfallende Müllvolumen vom Benutzer wesentlich besser abschätzen und überblicken läßt, als dies bei einer gewichtsbezogenen Berechnung der Fall wäre. Wird bspw. bei diesem volumenbezogenen Müllanfall ggf. ein Kostenanteil für das Leeren an sich hinzugenommen, so können hierdurch durch entsprechendes Benutzerverhalten zusätzlich Kosten eingespart werden. Es ist dadurch außerdem möglich, den Müllabtransport zu beschleunigen oder die abzufahrenden Gebiete zu vergrößern. Die Aus- bzw. Umrüstung der Müllfahrzeuge hierfür ist einfach.

Werden Müllfahrzeuge für Müllgefäße unterschiedlicher Volumina eingesetzt, so ist es zweckmäßig, die Merkmale gemäß Anspruch 3 vorzusehen.

Für einen schnellen und problemlosen Vorgang zum Vorbereiten des eigentlichen Entleerens des Müllgefäßes ist es vorteilhaft, die Merkmale gemäß Anspruch 4 vorzusehen.

Eine ungehinderte und sichere Messung des Füllstandsniveaus des Mülls innerhalb des Müllgefäßes ist erreicht, wenn die Merkmale gemäß Anspruch 5 vorgesehen sind.

Um mit Sicherheit das Erfassen der Müllgefäßdaten und der Meßgerätedaten vor dem Entleervorgang zu erreichen, sind die Merkmale gemäß Anspruch 6 vorgesehen.

Entsprechend den Merkmalen gemäß Anspruch 7 oder 8 kann das Gerät zum berührungslosen Messen in der einen oder anderen für andere Anwendungen bereits handelsüblichen Weise ausgebildet sein.

Eine Weiterbildung des Entsorgungssystems ergibt sich aus Anspruch 9. Sie ermöglicht eine gewisse Sortierung des Mülls zumindest in zwei voneinander verschiedene Kategorien, die mit einem Entleervorgang in ein Müllfahrzeug geschüttet werden können, das die Müllsorten getrennt zur Müllverwertungsanlage oder zur Mülldeponie fahren kann. Durch die Verwendung wenigstens zweier Meßgeräte ist es ohne weiteres möglich, die unterschiedlichen Müllmengen der Müllgefäßkammern exakt zu erfassen. Über den Identifizierungscode kann man die Reihenfolge der Meßvorgänge und Übermittlung der gemessenen Daten an den Rechner oder dgl. vorgeben. Er kann auch Einrichtungen am Müllfahrzeug steuern. Bei kleinen Haushaltsmüllgefäßen dürfte eine Unterteilung in mehr als zwei Kammern kaum in Frage kommen. Denkbar ist aber eine Unterteilung in drei oder vier Kammern bei einem Müll-Großgefäß. Andererseits sind aber insoweit Grenzen gesetzt, als das Müllfahrzeug insbesondere im Müll-Aufnahmebereich um so aufwendiger wird, je mehr Kammern das zu entleerende Müllgefäß aufweist.

Vorstehend wurde unterstellt, daß die verschiedenen Meßgeräte der Meßeinrichtung in vorgegebener oder gesteuerter Reihenfolge aktiviert werden. Bei entsprechender Ausbildung der Datenverarbeitungseinheit ist es auch vorstellbar, gleichzeitig sämtliche Meßgeräte zu aktivieren bzw. ein- und auszuschalten. Auf jeden Fall sind diese Meßgeräte stationär derart angebracht, daß bei den zu entleerenden Müllgefäßen jeder Kammer ein oder mehrere Meßgeräte zugeordnet ist.

Eine andere Variante der Erfindung entnimmt man Anspruch 10. Dort ist die Meßeinrichtung insofern weniger aufwendig, als sie lediglich ein Meßgerät aufweist. Dafür muß dieses Meßgerät aber in gewissem Umfange verstellbar sein, damit es nacheinander den verschiedenen Kammern zugeordnet werden kann. Die Höhenlage muß aber in jeder Arbeitsstellung des Meßgeräts dieselbe sein.

Eine andere Ausführungsform des Entsorgungssystems ist im Anspruch 11 beschrieben. Das Müllfahrzeug ist zwar als Mehrkammer-Fahrzeug ausgebildet, welches verschiedenartigen Müll transportieren kann, jedoch ist eine Unterteilung des Müllgefäßes in zwei oder mehr Kammern nicht vorgesehen. Damit der in das Müllfahrzeug geschüttete Müll nicht in die falsche Kammer gelangt, muß das Erfassungsgerät für den Identifizierungscode zunächst feststellen, welcher Art der im Müllgefäß befindliche Müll ist. Beispielsweise könnte man auf diese Weise Papiermüll getrennt vom Haushaltsmüll entsorgen. Über den Identifizierungscode wird die entsprechende Klappe oder dgl. des Müllfahrzeugs geöffnet und dadurch sichergestellt, daß das Papier oder dgl. auch nur in die hierfür vorgesehene Kammer des Fahrzeugs gelangt. Auf einer zweiten Tour könnte dann aus einer anderen Tonne mit anderem Identifizierungscode der Haushaltsmüll abgeholt und in die zweite Kammer des Müllfahrzeugs gebracht werden. Dann ist die Klappe der ersten Kammer geschlossen und diejenige der zweiten geöffnet.

Um ein ordnungsgemäßes Arbeiten sicherzustellen, ist es besonders vorteilhaft, daß der Benutzer-Identifizierungscode mittels einer Schutzblende abdeckbar ist. Die Schutzblende verhindert mechanische (z.B. mutwillige) Beschädigungen der Oberfläche des Code-Schildes und/oder deren Abreißen. Außerdem bleibt bei extremen Witterungseinflüssen, wie Eis und Schnee, das Code-Schild ablesbar. Die Schutzblende wird nur während des Entleervorgangs in die wirkungslose Stellung gebracht. Während des Befüllens oder sonstiger Wartezeiten kann die Schutzblende in ihrer wirksamen Stellung sein. Um aber trotzdem, bspw. mittels eines Handgeräts, den Benutzer-Identifizierungscode ablesen zu können, ist es besonders zweckmäßig, daß die Schutzblende ein Sichtfenster zum Ablesen des Codes aufweist.

In Weiterbildung der Erfindung wird vorgeschlagen, daß die Schutzblende verriegel- und/oder abschließbar ist. Eine besonders bevorzugte Ausführungsform der Erfindung sieht vor, daß die Verriegelungsvorrichtung für die Schutzblende zugleich eine Verriegelungsvorrichtung für den Deckel des Müllbehälters ist. Man kann also mit ein und derselben Verriegelungsvorrichtung das unbefugte Befüllen des Müllbehälters durch Nichtberechtigte und auch eine Beschädigung des Benutzer-Identifizierungscodes verhindern.

Besondere Ausgestaltungen der Verriegelungsvorrichtung ergeben sich aus den Ansprüchen 16 bis 20 und der nachfolgenden Beschreibung eines Ausführungsbeispiels.

Darüberhinaus sind zweckmäßigerweise die Merkmale gemäß Anspruch 21 vorgesehen, um dem Fahrer des Müllfahrzeugs eine Überwachung der ordnungsgemäßen Funktion des Entsorgungssystems zu ermöglichen.

Weitere Einzelheiten sind der nachfolgenden Beschreibung zu entnehmen, in der die Erfindung anhand des in der Zeichnung dargestellten bevorzugten Ausführungsbeispiels näher erläutert ist. Die Zeichnung zeigt:
- Figur 1: schematisch eine abgebrochene Seitenansicht des hinteren Bereichs eines ein mengenbezogenes Entsorgungssystems gemäß einem bevorzugten Ausführungsbeispiel vorliegender Erfindung beinhaltenden Müllfahrzeugs;
- Figur 2: in vergrößertem Maßstab eine abgebrochene Vorderansicht des Müllgefäßes im Bereich seiner Verriegelungsvorrichtung in Verriegelungsstellung;
- Figur 3: einen Vertikalschnitt durch das Müllgefäß der Figur 2 mit schematisch angedeuteter Hub- und Kippeinrichtung;
- Figur 4: eine der Figur 2 entsprechende Darstellung in der Entriegelungsstellung; und
- Figur 5: eine der Figur 3 entsprechende Darstellung zu Figur 4;
- Figur 6: eine Vorderansicht eines Zweikammer-Müllgefäßes beim Messen;

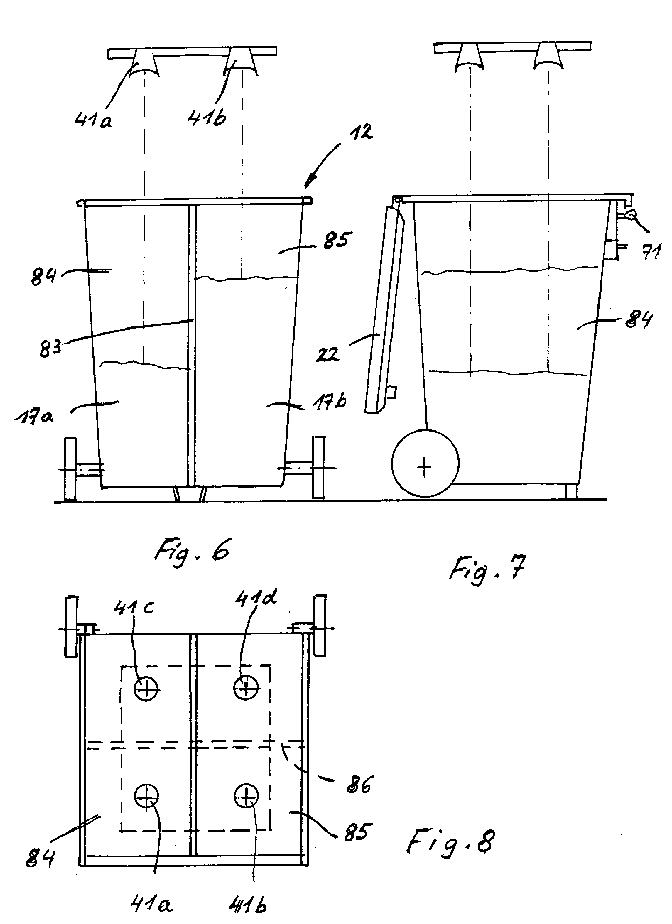

- Figur 7: eine Seitenansicht dieses Müllgefäßes und
- Figur 8: eine Draufsicht auf dieses Müllgefäß.

Das in der Zeichnung gemäß einem bevorzugten Ausführungsbeispiel vorliegender Erfindung dargestellte mengenbezogene Entsorgungssystem 10 für Haushalts-, Gewerbemüll und dgl. Müll verwendet bei genormten Müllgefäßen ein übliches Müllfahrzeug 11, die genormten Müllgefäße 12 jeweils einheitlicher Größe, wie sie vom Müllfahrzeug 11 gehandhabt und entleert werden können, eine Datenerfassungseinrichtung 13, eine Datenverarbeitungseinrichtung 14 und eine Steuerungseinrichtung 15 für eine Hub- und Kippeinrichtung 16 des Müllfahrzeugs 11. In Verbindung mit speziellen Müllgefäßen wird gemäß späterer Beschreibung ein entsprechend angepaßtes Müllfahrzeug verwendet.

Das mengenbezogene Entsorgungssystem 10 dient dazu, dem Benutzer bzw. Müllverursacher mit Entsorgungskosten zu belegen, die in Abhängigkeit vom anfallenden Müllvolumen ganz oder teilweise berechnet werden.

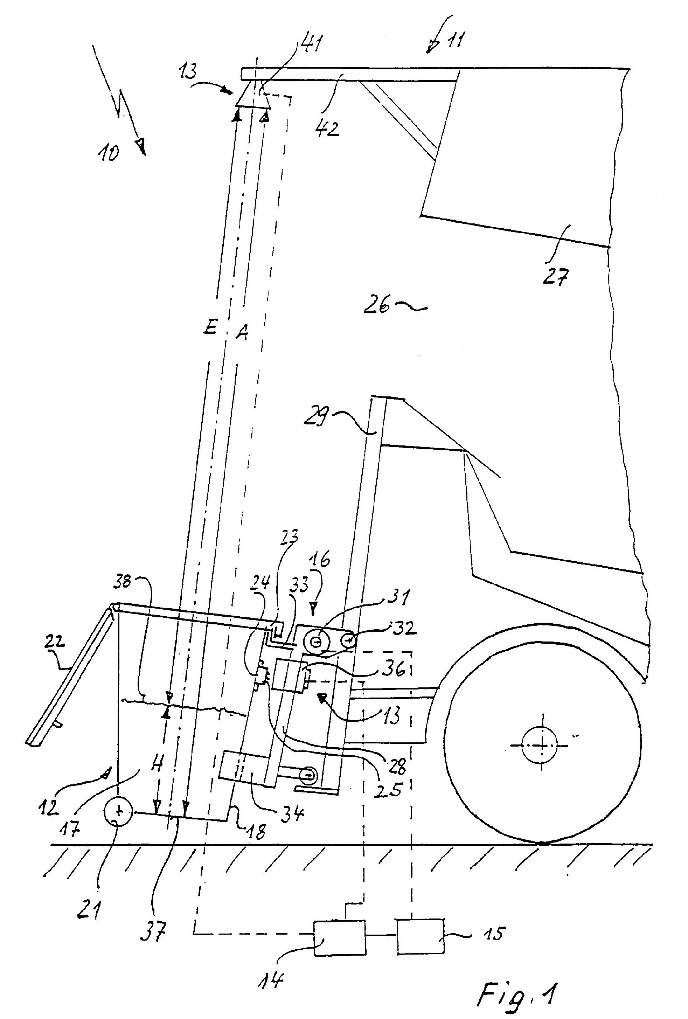

Das in der Figur 1 der Zeichnung dargestellte Müllgefäß 12 ist bspw. eine in üblicher Weise verwendete sogenannte Großmülltonne mit einem Fassungsvermögen von 80 l oder 120 l oder 240 l und bspw. aus Kunststoff hergestellt, auf Rollen 21 fahrbar und mit einem abklappbaren Deckel 22 versehen. Dem Scharnierbereich des Deckels 22 gegenüberliegend ist außerdem eine Einhängevorrichtung 23, die bspw. durch einen oberen überstehenden Randbereich gebildet ist, vorgesehen. In einem Bereich unterhalb dieser Einhängevorrichtung 23 ist ein Schild 24 aus einem geeigneten Material, wie Aluminium oder Kunststoff befestigt, das mit einem Benutzer-Identifizierungscode 25 versehen ist, der zur Identifizierung des oder der Benutzer des jeweiligen Müllgefäßes 12 dessen Daten oder die des Rechnungsempfängers und/oder die Daten der Wohnungseinheit oder der Gewerbeeinheit enthält und in dem außerdem die Abmessungsdaten bzw.

Volumendaten des zugeordneten Müllgefäßes 12 enthalten sind. Der Code 25 ist bspw. in Form des Strichcodes ausgebildet. Das Schild 24 ist fälschungssicher, bspw. verblombt am Müllgefäß 12 befestigt. Bei dem dargestellten Müllgefäß 12 ist das Schild 24 bspw. in einem Bereich zwischen 100 und 200 mm unterhalb der Einhängevorrichtung 23 und quermittig an der betreffenden Wand 18 des Müllgefäßes 12 angeordnet.

Es versteht sich, daß auch andere Müllgefäße 12 verwendet werden können, wie bspw. die bekannten aus Metall bestehenden, auf vier Rollen verfahrbaren und mit einem gewölbten Schwenkdeckel versehenen Großcontainer.

Das Müllfahrzeug 11, von dem in Figur 1 der Zeichnung lediglich der im wesentlichen interessierende hintere Bereich dargestellt ist, besitzt die Hub- und Kippeinrichtung 16, mit deren Hilfe das geöffnete und mit Müll 17 ganz oder teilweise gefüllte Mullgefäß 12 ergriffen und in den Bereich der Aufnahmeöffnung 26 eines Containeraufsatzes 27 des Müllfahrzeugs 11 gehoben und verschwenkt werden kann, um das Müllgefäß 12 zu entleeren. Dies Hub- und Kippeinrichtung 16 besitzt im wesentlichen zwei parallele Schwenkarme 28, die an ihrem oberen Ende unterhalb der Aufnahmeöffnung 26 an der Rückwand 29 des Müllfahrzeugs 11 angelenkt und mit Hilfe eines Antriebs 31 schwenkbar ist. Unterhalb des Antriebs 31 bzw. der Schwenkachse 32 der beiden parallelen Schwenkarme 28 sind Aufnahmehaken 33 für die Einhängevorrichtung 23 des Müllgefäßes 12 vorgesehen. Am unteren Ende sind die beiden parallelen Schwenkarme 28 mit seitlichen gegenüberliegenden Greifbacken 34 versehen, an denen sich der untere Bereich des Müllgefäßes 12 abstützt und die das Müllgefäß 12 beim Entleervorgang halten. In dieser dem Entleervorgang vorausgehenden Ausgangsposition des Müllgefäßes 12 an der Hub- und Kippeinrichtung 16 ist das Müllgefäß 12 in einer definierten Höhenlage gehalten.

Zwischen den beiden parallelen Schwenkarmen 28 der Hub- und Kippeinrichtung 16 ist gemäß Figur 1 ein Lesegerät 36 der Datenerfassungseinrichtung 13 befestigt, und zwar in einer Höhe, in der des in der genannten Ausgangsposition des Müllgefäßes 12 am Müllfahrzeug 11 den mit dem Strichcode 25 versehenen Schild 24 am Müllgefäß 12 genau gegenüberliegt. Auf diese Weise kann bei Aktivierung des Lesegerätes 36 der Strichcode 25 am Schild 24 abgelesen werden.

Die Datenerfassungseinrichtung 13 besitzt außerdem eine Meßvorrichtung, die in Figur 1 ein Meßgerät 41 zum berührungslosen Messen der Füllstandshöhe H des Mülls innerhalb des Müllgefäßes 12 aufweist, wobei der Abstand H die Höhe zwischen dem Boden 37 des Müllgefäßes 12 und einer im wesentlichen etwa mittleren Höhe bzw. Niveau 38 des Mülls 17 im Müllgefäß 12 angibt. Dieses Meßgerät 41 ist an einem im Höhenbereich der Oberkante des Müllfahrzeugs 11 befestigten Kragarm 42 in einer Position gehalten, in der es im wesentlichen senkrecht und mittig über dem Öffnungsquerschnitt des Müllgefäßes 12 angeordnet ist. Damit ist für jedes in definierter Position gehaltenen Müllgefäß 12 der Abstand zwischen dem Boden 37 und dem ortsfest angeordneten Meßgerät 41 als konstant anzunehmen.

Das Meßgerät 41 ist vorzugsweise ein berührungsloses akustisches Meßgerät in Form eines Ultraschall-Meßgerätes. Das Meßgerät kann aber auch ein optisches Meßgerät sein, bspw. in Form eines Infrarot-Meßgerätes. Jedenfalls wird von Meßgerät 41 die Entfernung E zum Müllniveau 38 im Müllgefäß 12 unmittelbar gemessen, wodurch aufgrund des konstanten Abstandes A zwischen Meßgerät 41 und Müllgefäßboden 37 die Müllstandshöhe H im Müllgefäß 12 erfaßt werden kann (H = A-E). Da die Müllgefäße 12 normiert sind, also vorgegebene Abmessungen aufweisen, ist damit für jede erwähnte gemessene Entfernung E bzw. für jede daraus ermittelte Füllstandshöhe H auch gleichzeitig das im Müllgefäß 12 enthaltene Müllvolumen V ermittelbar bzw. gegeben. Insoweit kann das Meßgerät 41 für jeden Müllgefäßtyp in Müllvolumen V geeicht werden.

Die Datenverarbeitungseinrichtung 14 des mengen- bzw. volumenbezogenen Entsorgungssystems 10 kann eine mit einem Speicher versehene übliche Datenverarbeitungseinheit sein; sie ist sowohl mit dem Lesegerät 36 als auch mit den Meßgerät 41 verbunden, so daß in ihr die vom Lesegerät 36 ankommenden Daten mit den von Meßgerät 41 ankommenden Daten verknüpft, zugeordnet und gespeichert werden. Auf diese Weise wird jedem Benutzer sowohl die Tatsache der Müllgefäßentleerung als auch das geleerte Müllvolumen zugeordnet und zur späteren Berechnung für jeden Benutzer erfaßt und gespeichert.

Die Datenverarbeitungseinrichtung 14 ist außerdem ausgangsseitig mit der Steuerungseinrichtung 15 verbunden, die wiederum mit dem Antrieb 31 der Hub- und Kippeinrichtung 16 zu deren Ansteuerung verbunden ist. Von der Datenverarbeitungseinrichtung 14 wird an die Steuerungseinrichtung 15 nur dann ein Impuls zur Ansteuerung des Antriebs 31 abgegeben, wenn sowohl die Daten vom Lesegerät 36 als auch die Daten vom Meßgerät 41 verarbeitet und gespeichert sind. Erst dann wird der Antrieb 31 der Hub- und Kippeinrichtung 16 für den Entleervorgang des Müllgefäßes 12 in Gang gesetzt. Ein erneutes Aktivieren des Lesegerätes 36 und des Meßgerätes 41 kann entweder per Knopfdruck durch die Bedienungspersonen oder in automatischer Weise durch einen Startimpuls nach dem Einhängen eines neuen Müllgefäßes 12 erfolgen.

In nicht dargestellter Weise sind sowohl die Datenverarbeitungseinrichtung 14 als auch die Steuerungseinrichtung 15 im Fahrerhaus des Müllfahrzeugs 11 untergebracht, was ggf. eine Überwachung der ordnungsgemäßen Funktion durch den Fahrer des Müllfahrzeugs 11 ermöglicht. Die Speicherung der ausgewerteten und verarbeiteten Daten kann in üblicher Weise erfolgen.

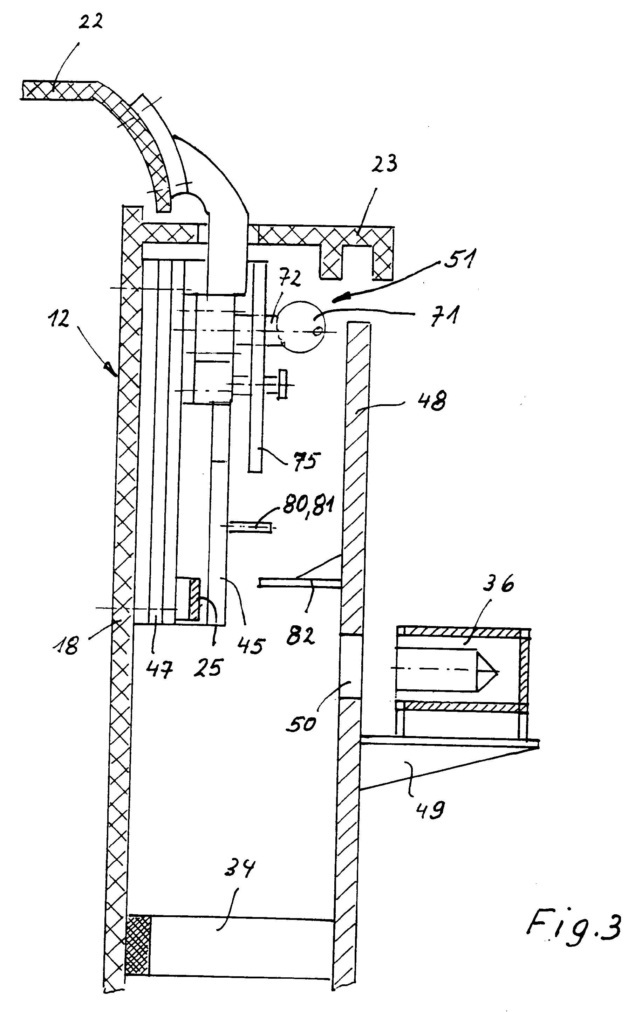

### Gemäß beispielsweise Figur 3 kann der

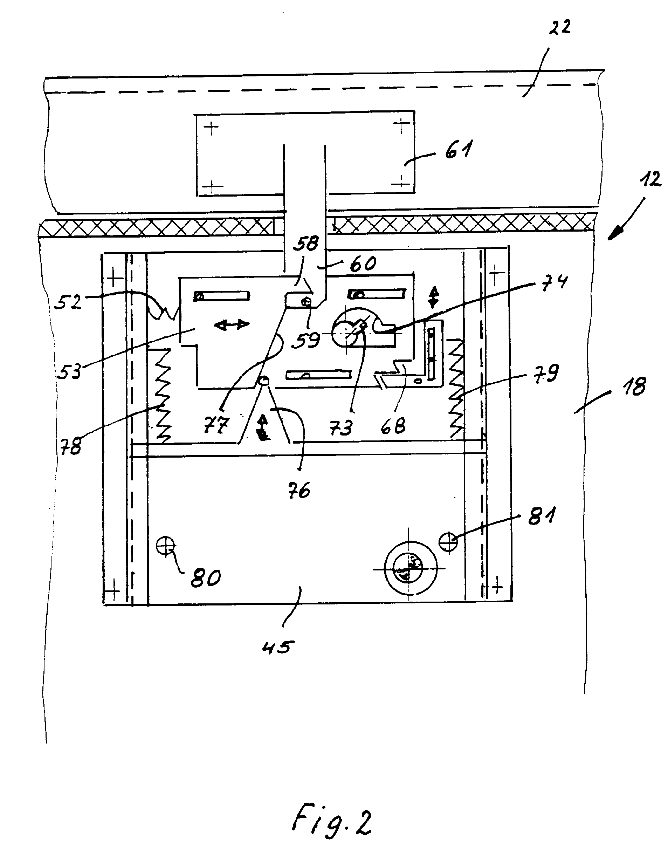

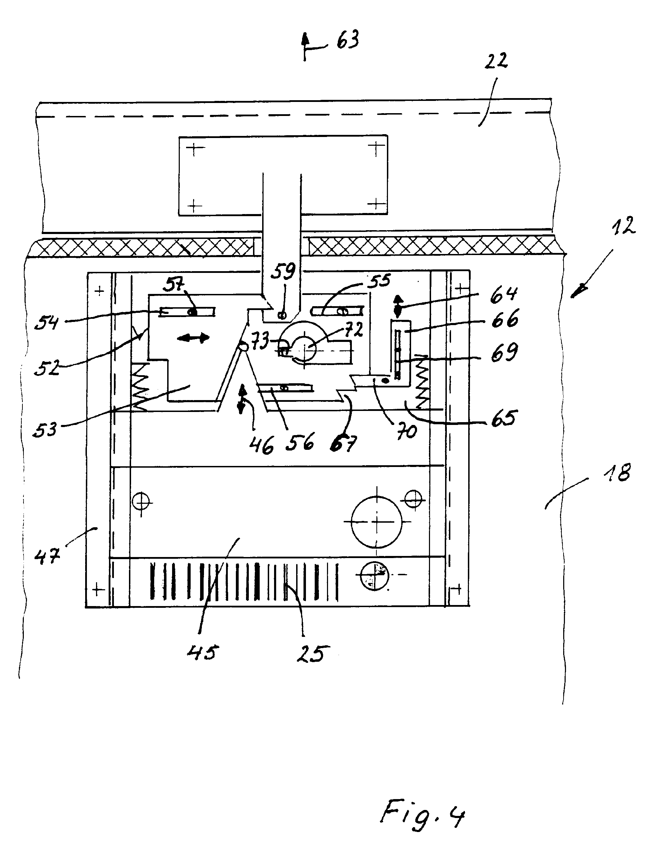

Benutzer-Identifizierungscode 25 mittels einer Schutzblende 45 abgedeckt werden. Sie ist im Sinne des Doppelpfeils 46 (Figur 4) an einem Rahmen 47 gelagert. In Figur 3 nimmt sie ihre wirksame untere Endstellung ein, während sie in Figur 4 in ihrer oberen Verschiebe-Endstellung ist, in der sie den Code 25 zum Ablesen durch das Lesegerät 36 freigibt. Dabei befindet sich dann auch im Gegensatz zu Figur 3 das Müllgefäß 12 in einer für das Ablesen korrekten Stellung gegenüber dem Lesegerät. Figur 3 zeigt das Müllgefäß 12 kurz vor dem Einhängen in den Aufnahmekamm 48 der Hub- und Kippeinrichtung 16. Letztere ist in den Figuren 2 bis 5 etwas abweichend vom Ausführungsbeispiel der Figur 1 ausgebildet. Aus diesem Grunde befindet sich auch das Lesegerät 36 gemäß Figur 3 auf einer Konsole 49 oder dgl. hinter dem Aufnahnekamm 48, der an der betreffenden Stelle einen Durchbruch 50 aufweist. Im übrigen kann die Schutzblende 45 in nicht näher gezeigter Weise mit einem Sichtfenster ausgestattet sein, so daß man durch letzteres hindurch den Code 45 auch in der Verriegelungsstellung der Schutzblende 45 ablesen kann.

Die Schutzblende 45 ist, wie eben angedeutet, verriegel- und/oder abschließbar. In besonders bevorzugter Weise ist die hierbei verwendete Verriegelungsvorrichtung 51 zugleich auch eine Verriegelungsvorrichtung für den Deckel 22 des Müllgefäßes 12.

Ein wichtiges Element der Verriegelungsvorrichtung 51 ist ein gegen wenigstens eine Rückstellfeder 52 in Figur 4 von rechts nach links verschiebbarer Verriegelungsschieber 53. Zur Längsführung ist er mit verschiedenen horizontal verlaufenden Längsschlitzen 54,55 und 56 ausgestattet, in welche jeweils ein gefäßfester Führungszapfen 54 eingreift. In Figur 4 nimmt der Verriegelungsschieber 53 seine Freigabestellung ein, während er sich in Figur 2 in seiner Verriegelungsstellung befindet.

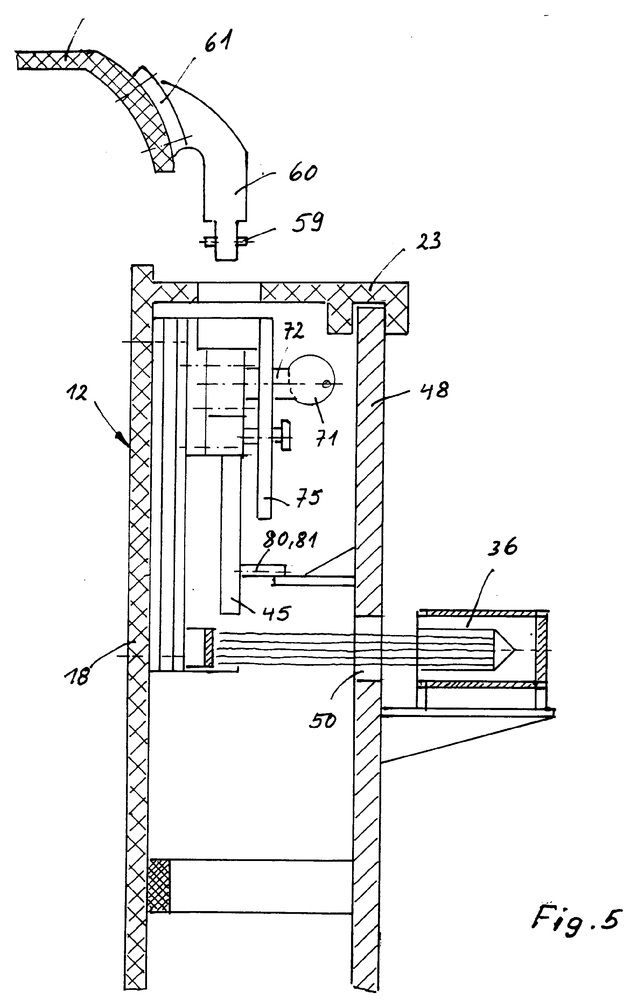

Dabei übergreift ein hakenartiger Ansatz 58 des Verriegelungsschiebers 53 einen senkrecht zur Bildebene vorstehenden, bspw. bolzenartigen, Verriegelungsansatz 59 am nach unten ragenden Arm 60 eines Schließriegels 61, der am Deckel 22 des Müllgefäßes 12 befestigt ist. Wenn man den Verriegelungsschieber 53 ausgehend von der Stellung nach Figur 2 nach links verschiebt, was bspw. von Hand mittels eines Bedienungselements 62 (Figur 5) möglich ist, so kommt der Verriegelungsansatz gemäß Figur 4 frei, und dies ermöglicht dann, den Deckel im Sinne des Pfeils 62 nach oben zu schwenken und in die Öffnungsstellung gemäß bspw. Figur 1 zu bringen.

Gemäß Figur 4 kann diese Freigabestellung des Verriegelungsschiebers 53 arretiert werden. Hierzu dient ein in vertikaler Richtung im Sinne des Doppelpfeils 64 verschiebbar an einer Grundplatte 65 gelagertes Sperrglied 66, das beim Ausführungsbeispiel L-förmige Gestalt hat. Sein horizontaler Winkelschenkel greift in eine von zwei sägezahnartigen Ausnehmungen 67 oder 68 des Verriegelungsschiebers 53 ein. Bei verriegeltem Schieber 53 erfolgt der Eingriff des freien Endes des horizontalen Schenkels des Sperrglieds 66 in die Ausnehmung 67. Die Ausnehmung 68 ist demgegenüber in horizontaler Richtung zurückversetzt, weswegen bei einem Eingriff des Sperrglieds 66 in die Ausnehmung 68 der Verriegelungsschieber 53 gemäß Figur 4 in seiner wirkungslosen Stellung gehalten ist. Im übrigen ist das Sperrglied 66 an seinem vertikalen Schenkel mit einem Langloch 69 versehen, in welches zwei übereinander angeordnete Bolzen zum Zwecke der Vertikalführung eingreifen. Ein symbolisch angedeuteter Griff 70 ermöglicht die Handverstellung. Beim Ausführungsbeispiel kommt der Ausnehmung 67 nur insofern Bedeutung zu, als sie den notwendigen Platz für das freie Ende des horizontalen L-Schenkels des Sperrglieds 66 in der Verriegelungsstellung des Verriegelungsschiebers 53 schafft.

Um das Müllgefäß 12 trotz dieser Verriegelungsvorrichtung 51 befüllen zu können, muß der Verriegelungsschieber 53 in eine wirkungslose Stellung gebracht werden können, in der er dann mittels des Sperrglieds 66 arretiert wird. Das Überführen des Verriegelungsschiebers 53 in diese wirkungslose Stellung erreicht man mit Hilfe eines Schließzylinders 72 mit zugehörigen Schlüssel 71. Der Schließzylinder ist an einer Abdeckplatte 75 gehalten. Der Schließbart 73 des Schließzylinders 72 greift in eine Ausnehmung 74 des Verriegelungsschiebers 53 ein, deren Form sich aus den Figuren 2 und 4 ergibt. Bei verriegeltem Deckel 22 weist der Schließbart 73 bspw. nach rechts. In Figur 2 ist eine leicht gedrehte Stellung gezeichnet. Wenn er nach rechts weist, so kann der Verriegelungsschieber 53 beim automatischen Entleeren des Müllgefäßes 12 durch das Müllfahrzeug relativ zum Schließzylinder und damit auch zum Schließbart 73 von rechts nach links verschoben werden. Um aber dieses Verschieben auch mit Hilfe des Schlüssels bewerkstelligen zu können, dreht man den Schlüssel 71 im Gegenuhrzeigersinne, bis der Schließbart 73 von rechts nach links weist (Figur 4). Bei dieser Drehbewegung, zumindest während der zweiten Hälfte dieser 180°-Drehbewegung drückt der Schließbart gegen die bogenförmige Kontur der Ausnehmung 74 und bewirkt dadurch das Verschieben des Verriegelungsschiebers 53 von rechts nach links, also von der Verriegelungs- in die Freigabestellung. Nunmehr kann der Deckel 22 beliebig geöffnet und wieder geschlossen werden.

Wenn man das Müllgefäß 12 bspw. von einem geschlossenen oder zumindest gesicherten Raum ins Freie verbringt, so dreht man den Schlüssel 71 im Uhrzeigersinne und verbringt auch das Sperrglied 66 in seine untere wirkungslose Stellung. Dadurch wird dann der Schließriegel 61 am Deckel 22 des Müllgefäßes 12 wieder eingeriegelt. Den Schlüssel 71 kann man jetzt abziehen. Trotzdem ist ein Entleeren durch die Müllabfuhr problemlos möglich. Dies geschieht in der nachstehend geschilderten Weise.

Am oberen Ende der Schutzblende 45 befindet sich ein beim Ausführungsbeispiel dornartiges Auflaufglied 76, das gemäß der schematisierten Darstellung mit einer Gleitrolle ausgestattet sein kann. Diese bzw. das freie Ende des Auflaufglieds 76 arbeitet mit einer schrägen Kante oder Schrägfläche 77 des Verriegelungsschiebers 53 zusammen, wobei das Auflaufglied und die Schrägfläche eine Kraftumlenkungsvorrichtung bilden. Die Schräge ist so gewählt, daß ein Hochschieben der Schutzblende 45 von der Stellung nach Figur 2 in diejenige gemäß Figur 4 ein Verschieben des Verriegelungsschiebers 53 von rechts nach links bewirkt. Die Schutzblende 45 ist bspw. gegen die Wirkung zweier Rückstellfedern 78 und 79 hochschiebbar.

Wenn das Müllgefäß 12 mit Hilfe des Müllfahrzeugs 11 entleert werden soll, so setzt man es in der vorstehend beschriebenen Weise auf die Hub- und Kippeinrichtung 16. Dabei übergreift dann beim Ausführungsbeispiel nach den Figuren 2 bis 5 die gabelartige Einhängevorrichtung 23 das obere Ende des Aufnahmekamms 48 am Müllfahrzeug 11. Beim Absenken des Müllgefäßes 12 auf die Hub- und Kippeinrichtung 16 laufen zwei horizontal im Abstand nebeneinander angeordnete Mitnahmezapfen 80 und 81 der Schutzblende 45 auf einem in deren Bewegungsbereich befindlichen konsolartigen Auflaufelement 82 des Aufnahmekamms 48 auf. Infolgedessen kann die Schutzblende 45 die weitere Abwärtsbewegung nicht mehr mitmachen. Dies bedeutet, daß der Verriegelungsschieber 53 relativ zum Auflaufglied 76 weiter abgesenkt wird, und diese Absenkbewegung bewirkt dann das Verschieben des Verriegelungsschiebers 53 von rechts nach links, d.h. in seine Freigabestellung. Anschließend kann dann das Müllgefäß 12 in bekannter Weise mit Hilfe der Hub- und Kippeinrichtung 16 entleert werden.

Das erfindungsgemäße Entsorgungssystem eignet sich vorzüglich auch zur Entleerung spezieller Müllgefäße 12, bspw. eines Müllgefäßes, das mittels einer vertikalen Trennwand 83 in zwei Kammern 84 und 85 unterteilt ist. Diese können gemäß Figur 6 unterschiedlich hoch befüllt sein. Trotzdem bereitet die Erfassung dieser unterschiedlichen Müllmengen keinerlei Problem. Über den Identifizierungscode 25 kann man nämlich die Querschnittsflächen der Kammern 84 und 85 an die Datenerfassungseinrichtung 13 melden. Wichtig ist aber, daß man die Füllstandshöhe jeder Kammer separat messen und an die Datenerfassungseinrichtung 13 weiterleiten kann.

Zu diesem Zwecke ist die Meßeinrichtung mit zwei Meßgeräten 41a und 41b ausgestattet. Jede ist bei eingehängtem Müllgefäß 12 einer Kammer 84 bzw. 85 zugeordnet. Wenn man gemäß Figur 8 das Müllgefäß 12 mittels einer weiteren vertikalen Trennwand 86 in vier Kammern unterteilt, so ist selbstverständlich jeder dieser Kammern ein Meßgerät zuzuordnen. Statt dessen kann man in nicht gezeigter Weise auch nur ein einziges Meßgerät 41 vorsehen, das mit Hilfe einer Verstellvorrichtung nacheinander jeder Kammer zugeordnet wird, sobald das Meßergebnis der zuvor zugeordneten Kammer erstellt und weitergeleitet worden ist. Es ist auch möglich, jeder Kammer mehr als ein Meßgerät zuzuordnen, welche Meßgeräte über die Querschnittsfläche der Kammer verteilt sind und einen Füllstandsmittelwert angeben.

Für die Entleerung dieser speziellen Müllgefäße 12 muß natürlich auch das Müllfahrzeug 11 entsprechend ausgerüstet sein. Es benötigt entweder zwei nebeneinanderliegende Aufnahmeöffnungen 26 entsprechend geringerer Größe oder aber einen Einfüllschacht mit einer Zwischenwand, welcher derjenigen der vertikalen Trennwand 83 entspricht und dieser beim Entleeren auch zugeordnet ist. Das Müllfahrzeug muß einen in zwei Kammern unterteilten Container oder dgl. aufweisen, so daß die verschiedenen Müllsorten im Fahrzeug nicht vermischt werden. Ggf. kann man die Eingänge in jeden der Containerräume des Müllfahrzeugs 11 durch Klappen verschließen und mit Hilfe des Identifizierungscodes am Müllgefäß 12 die notwendige Klappensteuerung durchführen.

Verfahrensgemäß erfolgt gemäß Figur 1 das volumenbezogene Entsorgen von Haushaltsmüll, Gewerbemüll und dgl. dadurch, daß das zu entleerende Müllgefäß 12 geöffnet und in ihre entsprechende Position am Müllfahrzeug 11 gebracht wird. Es werden dann mit Hilfe des Lesegerätes 36 das Schild 24 bzw. die im Code 25 enthaltenen Daten abgelesen und zur Datenverarbeitungseinrichtung 14 übertragen. Danach wird vorzugsweise automatisch das Lesegerät 36 zur Müllvolumenbestimmung aktiviert und dessen Daten ebenfalls der Datenverarbeitungseinrichtung 14 übergeben. Sind diese vom Lesegerät 36 und vom Meßgerät 41 übermittelten Daten in der Datenverarbeitungseinrichtung miteinander verknüpft und abgespeichert, erfolgt über die Steuerungseinrichtung 15 die Freigabe der Hub- und Kippeinrichtung 13 für den Vorgang des Entleerens des Inhalts 17 des Müllgefäßes 12 in den Containeraufsatz 27 des Müllfahrzeugs 11. Dieser Datenerfassungsvorgang vor dem eigentlichen Entleerungsvorgang bedarf nur weniger Sekunden, so daß dadurch die Laufzeit des Müllfahrzeugs 11 unerheblich verlängert wird. Die Laufzeit kann darüber hinaus dadurch reduziert werden, daß die Berechnung nicht nur auf der Grundlage des anfallenden Müllvolumens V sondern teilweise auch auf der Grundlage der Anzahl der Entleerungsvorgänge pro Müllgefäß 12 dem Benutzer bzw. Müllverursacher berechnet wird. Die in der Datenverarbeitungseinrichtung 14 gespeicherten Daten werden am Ende eines Entleerungstages in eine Abrechnungsanlage der Rechnungsstellungsstelle bspw. im Landratsamt überspielt. Es versteht sich, daß dabei in der Datenverarbeitungseinrichtung 14 zusätzlich Datum und Uhrzeit der Entleerung des betreffenden Müllgefäßes 12 mit berücksichtigt sein können.

## Patentansprüche

1. Verfahren zum mengenbezogenen Entsorgen von Haushalts-, Gewerbe- und dgl. Müll, bei dem mittels eines Müllfahrzeugs Müllgefäße einheitlicher Größengruppen vorzugsweise periodisch geleert und der Müll abtransportiert wird, wobei ein am Müllgefäß angebrachter und dessen Benutzer identifizierender Code abgelesen und das Messen des Mülls im Müllgefäß vorgenommen wird, die Daten des Codes und des Meßschrittes zugeordnet und gespeichert werden und der Entleerungsvorgang des Müllgefäßes freigegeben und durchgeführt wird, **dadurch gekennzeichnet,** daß die Müllmenge berührungslos aus einer vorgegebenen Höhe über dem Müllgefäßboden als Füllstandsniveau im Müllgefäß gemessen wird.

2. Mengenbezogenes Entsorgungssystem (10) für Haushalts-, Gewerbe- und dgl. Müll, bei dem mittels eines Müllfahrzeugs (11) Müllgefäße (12) einheitlicher Größengruppen vorzugsweise periodisch geleert und der Müll (17) abtransportiert wird, mit einem am Müllgefäß (12) angebrachten, vorzugsweise maschinenlesbaren Benutzer-Identifizierungscode (25), einem am Müllfahrzeug (11) angebrachten Erfassungsgerät (36) für den Benutzer-Identifizierungscode (25), einer am Müllfahrzeug angeordneten Meßanordnung für die Müllmenge und einer mit einem Speicher versehenen Datenverarbeitungseinheit (14), die sowohl mit dem Lesegerät (36) als auch mit der Meßanordnung (41) verbunden ist, dadurch gekennzeichnet, daß als Meßanordnung eine oberhalb des zu entleerenden und in einer bestimmten Position gehaltenen Müllgefäßes (12) angebrachte Meßvorrichtung mit mindestens einem Meßgerät (41) zum berührungslosen Bestimmen des im Müllgefäß (12) enthaltenen Müllvolumens (V) durch Messen der Entfernung (E) vom Meßgerät (41) zur Mülloberfläche (38) im Müllgefäß (12) dient.

3. Entsorgungssystem nach Anspruch 2, dadurch gekennzeichnet, daß der Benutzer-Identifizierungscode (25) gleichzeitig Abmessungsdaten des betreffenden Müllgefäßes (12) enthält.

4. Entsorgungssystem nach Anspruch 2 oder 3, dadurch gekennzeichnet, daß der Identifizierungscode (25) an der einer Hub- und Kippvorrichtung (16) am Müllfahrzeug (11) zugewandten Außenseite des Müllgefäßes (12) und das Lesegerät (36) an einem Arm (28) der Hub- und Kippvorrichtung (16) oder hinter diesem Arm (28) am Müllfahrzeug derart gehalten ist, daß Identifizierungscode (25) und Lesegerät (36) im von der Hub- und Kippvorrichtung (16) ergriffenen und enthaltenen Zustand des Müllgefäßes (12) einander gegenüberliegen.

5. Entsorgungssystem nach mindestens einem der Ansprüche 2 - 4, dadurch gekennzeichnet, daß das bzw. jedes Meßgerät (41) in einem der Oberkante des Müllfahrzeugs (11) entsprechenden Höhenbereich angeordnet ist.

6. Entsorgungssystem nach mindestens einem der Ansprüche 2 - 5, dadurch gekennzeichnet, daß die Datenverarbeitungseinheit (14) mit einem Steuergerät (15) verbunden ist, das nach Erfassen und Speichern der Daten von Meßgerät (41) und vom Lesegerät (36) einen Antrieb (31) der Hub- und Kippvorrichtung (16) ansteuert.

7. Entsorgungssystem nach mindestens einem der Ansprüche 2 - 6, dadurch gekennzeichnet, daß das Meßgerät (41) ein optisches, vorzugsweise ein Infrarot-Entfernungsmeßgerät ist.

8. Entsorgungssystem nach mindestens einem der Ansprüche 2 - 6, dadurch gekennzeichnet, daß das Meßgerät (41) ein akustisches, vorzugsweise ein Ultraschall-Entfernungsmeßgerät ist.

9. Entsorgungssystem nach mindestens einem der Ansprüche 2 - 8, dadurch gekennzeichnet, daß die Meßeinrichtung wenigstens zwei im seitlichen Abstand angebrachte Meßgeräte (4) aufweist, und das Müllgefäß (12) mittels mindestens einer vertikalen Tennwand (83) in Kammern (84,85) unterteilt ist, wobei jeder Kammer ein Meßgerät (41) zugeordnet ist, daß außerdem der Identifizierungscode (25) Daten über die Kammergröße, sowie Steuerungsdaten für die Meßgeräte (41) aufweist, und daß die Füllöffnung des Müllfahrzeugs (11) entsprechend den Kammerentleeröffnungen des Müllgefäßes (12) unterteilt ist, wobei jeder Teil-Füllöffnung des Müllfahrzeugs (11) ein getrennter Füllraum im Müllbehälter des Fahrzeugs zugeordnet ist.

10. Entsorgungssystem nach mindestens einem der Ansprüche 2 - 8, dadurch gekennzeichnet, daß die Meßeinrichtung ein verstellbares Meßgerät (41) aufweist und das Müllgefäß (12) mittels mindestens einer vertikalen Trennwand (83) in Kammern (84,85) unterteilt ist, wobei das Meßgerät (41) einer Kammer (84,85) nach der anderen zuordenbar ist, daß außerden der Identifizierungscode (25) Daten über die Kammergröße sowie Steuerungsdaten für das Meßgerät (41) aufweist, und daß die Füllöffnung des Müllfahrzeugs (11) entsprechend den Kammerentleeröffnungen des Müllgefäßes (12) unterteilt ist, wobei jeder Teil-Füllöffnung des Müllfahrzeugs (11) ein getrennter Füllraum im Müllbehälter des Fahrzeugs zugeordnet ist.

11. Entsorgungssystem nach mindestens einem der Ansprüche 2 - 8, dadurch gekennzeichnet, daß das Müllfahrzeug (11) als Mehrkammerfahrzeug mit einer der Kammerzahl entsprechenden, durch steuerbare Klappen oder dgl. verschließbaren Füllöffnungen ausgebildet ist, und daß der Benutzer-Identifizierungscode (25) Steuerdaten für eine der Klappen oder dgl. aufweist.

12. Entsorgungssystem nach mindestens einem der Ansprüche 2- 11, dadurch gekennzeichnet, daß der Benutzer-Identfizierungscode (25) mittels einer Schutzblende (45) abdeckbar ist.

13. Entsorgungssystem nach Anspruch 12,dadurch gekennzeichnet, daß die Schutzblende (45) ein Sichtfenster zum Ablesen des Benutzer-Identifizierungscodes (25) aufweist.

14. Entsorgungssystem nach Anspruch 12 oder 13, dadurch gekennzeichnet, daß die Schutzblende (45) verriegel- und/oder abschließbar ist.

15. Entsorgungssystem nach Anspruch 14, dadurch gekennzeichnet, daß die Verriegelungsvorrichtung (51) für die Schutzblende (45) zugleich eine Verriegelungsvorrichtung für den Deckel (22) des Müllgefäßes (12) ist.

16. Entsorgungssystem nach Anspruch 15, dadurch gekennzeichnet, daß die Verriegelungsvorrichtung (51) einen etwa horizontal gegen wenigstens eine Rückstellfeder (52) in die Freigabestellung verschiebbaren Verriegelungsschieber (53) aufweist, der in seiner Arbeitsstellung einen Verriegelungsansatz (59) eines am Deckel (22) des Müllgefäßes (12) angebrachten Schließriegels (61) oder dgl. von oben her übergreift und der über eine Kraftumlenkungsvorrichtung (76,77) mit der in etwa vertikaler Richtung gegen mindestens eine Rückstellfeder (78,79) in die Freigabestellung verschiebbaren Schutzblende (45) gekuppelt ist.

17. Entsorgungssystem nach Anspruch 16, dadurch gekennzeichnet, daß die Kraftumlenkungsvorrichtung aus einer Schrägfläche (77) oder -kante des Verriegelungsschiebers (53) und einem Anlaufglied (76) der Schutzblende (45) besteht.

18. Entsorgungssystem nach mindestens einem der Ansprüche 12 - 17, dadurch gekennzeichnet, daß die Schutzblende (45) mindestens einen Mitnahmezapfen (80,81) oder dgl. Element aufweist, der mit einem Auflaufelement (82) am Aufnahmekamm (48) der Hub- und Kippeinrichtung (16) des Müllfahrzeugs (11) in der Weise zusammenwirkt, daß dem vollständig eingehängten Müllgefäß (12) die hochgeschobene Stellung der Schutzblende (45) zugeordnet ist.

19. Entsorgungssystem nach mindestens einem der Ansprüche 12 - 18, 18, dadurch gekennzeichnet, daß der Verriegelungsschieber (53) mittels eines insbesondere in etwa vertikaler Richtung (64) verstellbaren Sperrglieds (66) in seiner wirkungslosen Stellung arretierbar ist.

20. Entsorgungssystem nach mindestens einem der Ansprüche 12 - 19, dadurch gekennzeichnet, daß der Verriegelungsschieber (53) mittels eines an einer vorgelagerten Abdeckplatte (75) gehaltenenen Schlosses mit Sperrglied, insbesondere eines Schließzylinders (72) mit Schließbart (73), in seiner entsperrten Stellung arretierbar ist.

21. Entsorgungssystem nach mindestens einem der Ansprüche 2 - 20, 20, dadurch gekennzeichnet, daß die Datenverarbeitungseinheit (14) und/oder die Steuereinheit (15) im Fahrerhaus des Müllfahrzeugs (11) untergebracht sind bzw. ist.

## Claims

1. A process for the quantity-related disposal of domestic, industrial and the like refuse, in which by means of a refuse vehicle refuse containers of unitary size are preferably periodically emptied and the refuse is transported away, wherein a code provided on the refuse container and identifying the user thereof is read off and measurement of the refuse in the refuse container is effected, the data of the code and the measuring step are associated and stored and the refuse container emptying operation is enabled and effected, characterised in that the quantity of refuse is measured in a contact-less manner from a predetermined height above the bottom of the refuse container as the filling level in the refuse container.

2. A quantity-related disposal system (10) for domestic, industrial and the like refuse, in which by means of a refuse vehicle (11) refuse containers (12) of unitary size are preferably periodically emptied and the refuse (17) is transported away, comprising a preferably machine-readable user identification code (25) which is provided on the refuse container (12), a detection device (36) on the refuse vehicle (11) for the user identification code (25), a measuring arrangement disposed on the refuse vehicle for measuring the quantity of refuse and a data processing unit (14) which is provided with a memory and which is connected both to the reading device (36) and also to the measuring arrangement (41), characterised in that serving as the measuring arrangement is a measuring apparatus disposed above the refuse container (12) which is to be emptied and which is held in a given position, the measuring apparatus having at least one measuring device (41) for determining in a contact-less manner the volume of refuse (V) contained in the refuse container (12), by measuring the distance (E) from the measuring device (41) to the surface (38) of the refuse in the refuse container (12).

3. A disposal system according to claim 2 characterised in that the user identification code (25) contains at the same time dimensional data in respect of the refuse container (12) in question.

4. A disposal system according to claim 2 or claim 3 characterised in that the identification code (25) is on the outside of the refuse container (12), which is towards a lifting and tilting device (16) on the refuse vehicle (11), and the reading device (36) is held on an arm (28) of the lifting and tilting device (16) or behind said arm (28) on the refuse vehicle in such a way that the identification code (25) and the reading device (36) are disposed opposite each other in the condition of the refuse container (12) in which it is contained and engaged by the lifting and tilting device (16).

5. A disposal system according to at least one of claims 2 to 4 characterised in that the or each measuring device (41) is arranged in a heightwise region corresponding to the upper edge of the refuse vehicle (11).

6. A disposal system according to at least one of claims 2 to 5 characterised in that the data processing unit (14) is connected to a control device (15) which, after detection and storage of the data by the measuring device (41) and the reading device (36), actuates a drive (31) of the lifting and tilting device (16).

7. A disposal system according to at least one of claims 2 to 6 characterised in that the measuring device (41) is an optical, preferably an infra-red distance-measuring device.

8. A disposal system according to at least one of claims 2 to 6 characterised in that the measuring device (41) is an acoustic, preferably an ultrasonic distance measuring device.

9. A disposal system according to at least one of claims 2 to 8 characterised in that the measuring means has at least two measuring devices (41) which are disposed at a lateral spacing and the refuse container (12) is subdivided into chambers (84, 85) by means of at least one vertical partitioning wall (83), wherein a measuring device (41) is associated with each chamber, that in addition the identification code (25) has data about the chamber size as well as control data for the measuring devices (41), and that the filling opening of the refuse vehicle (11) is subdivided in a manner corresponding to the chamber emptying openings of the refuse container (12), wherein a separate filling space in the refuse container compartment of the vehicle is associated with each part of the filling opening of the refuse vehicle (11).

10. A disposal system according to at least one of claims 2 to 8 characterised in that the measuring means has a displaceable measuring device (41) and the refuse container (12) is subdivided into chambers (84, 85) by means of at least one vertical partitioning wall (83), wherein the measuring device (41) can be associated with one chamber (84, 85) after the other, that in addition the identification code (25) has data relating to the chamber size as well as control data for the measuring device (41), and that the filling opening of the refuse vehicle (11) is subdivided in a manner corresponding to the chamber emptying openings of the refuse container ( 12), wherein a separate filling space in the refuse container compartment of the vehicle is associated with each part of the filling opening of the refuse vehicle (11).

11. A disposal system according to at least one of claims 2 to 8 characterised in that the refuse vehicle (11) is in the form of a multi-chamber vehicle with a number of filling openings corresponding to the number of chambers and closable by controllable flaps or the like, and that the user identification code (25) has control data for one of the flaps or the like.

12. A disposal system according to one of claims 2 to 11 characterised in that the user identification code (25) can be covered over by means of a protective shutter member (45).

13. A disposal system according to claim 12 characterised in that the protective shutter member (45) has a viewing window for reading off the user identification code (25).

14. A disposal system according to claim 12 or claim 13 characterised in that the protective shutter member (45) can be locked and/or fastened shut.

15. A disposal system according to claim 14 characterised in that the locking device (51) for the protective shutter member (45) is at the same time a locking device for the cover (22) of the refuse container (12).

16. A disposal system according to claim 15 characterised in that the locking device (51) has a locking slider (53) which is displaceable substantially horizontally against at least one return spring (52) in to the release position and which in its operative position engages from above over a locking projection (59) of a closure bar (61) or the like which is provided on the cover (22) of the refuse container (12), which locking slider (53) is coupled by a force-diversion means (76, 77) to the protective shutter member (45) which is displaceable in a substantially vertical direction against at least one return spring (78, 79) into the release position.

17. A disposal system according to claim 16 characterised in that the force-diversion means comprises an inclined surface (77) or edge of the locking slider (53) and a run-on member (76) on the protective shutter member (45).

18. A disposal system according to at least one of claims 12 to 17 characterised in that the protective shutter member (45) has at least one entrainment pin (80, 81) or the like element which co-operates with a run-on element (82) on the pick-up comb (48) of the lifting and tilting device (16) of the refuse vehicle (11) in such a way that the upwardly displaced position of the protective shutter member (45) is associated with the completely suspended refuse container (12).

19. A disposal system according to at least one of claims 12 to 18 characterised in that the locking slider (53) can be arrested in its inoperative position by means of a locking member (66) which is displaceable in particular in a substantially vertical direction (64).

20. A disposal system according to at least one of claims 12 to 19 characterised in that the locking slider (53) can be arrested in its unlocked position by means of a lock with locking member held on a cover plate (75) mounted in front thereof, in particular a lock cylinder (72) with lock bit (73).

21. A disposal system according to at least one of claims 2 to 20 characterised in that the data processing unit (14) and/or the control unit (15) is or are disposed in the driving cab of the refuse vehicle (11).

## Revendications

1. Procédé pour l'enlèvement quantitatif d'ordures ménagères, de déchets industriels et autres déchets du même genre, dans lequel des poubelles de taille uniforme sont vidées, de préférence périodiquement, et les déchets enlevés, au moyen d'un véhicule d'enlèvement des déchets, dans lequel un code apposé sur la poubelle, et qui identifie son utilisateur, est lu et la mesure des déchets contenus dans la poubelle est exécutée, les données relatives au code et à la phase de mesure sont affectées et mémorisées, et l'opération de vidange de la poubelle est déclenchée et exécutée, caractérisé en ce que la quantité de déchets est mesurée, par détermination du niveau de remplissage de la poubelle, sans contact physique, à partir d'une hauteur prédéterminée au-dessus du fond de la poubelle.

2. Système d'enlèvement quantitatif (10) pour ordures ménagères, déchets industriels et autres déchets, dans lequel, au moyen d'un véhicule d'enlèvement des déchets (11), des poubelles (12) de taille uniforme sont vidées, de préférence périodiquement, et les déchets (17) sont enlevés, au moyen d'un véhicule (11) d'enlèvement des déchets, comprenant un code (25) d'identification de l'utilisateur, apposé sur la poubelle (16), de préférence lisible par une machine, un appareil (36) de détection du code d'identification de l'utilisateur fixé au véhicule (11) d'enlèvement des déchets, un équipement de mesure (41) monté sur le véhicule d'enlèvement des déchets, destiné à mesurer la quantité de déchets, et une unité de traitement des données (14) munie d'une mémoire, qui est connectée à la fois à l'appareil de lecture (36) et à l'équipement de mesure (41), caractérisé en ce qu'il comporte, comme équipement de mesure, un dispositif de mesure disposé au-dessus de la poubelle (12) à vider, qui est maintenu dans une position déterminée, avec au moins un appareil de mesure (41) servant à déterminer sans contact physique le volume de déchets (V) contenu dans la poubelle (12), par mesure de la distance (E) de l'appareil de mesure (41) à la surface (38) des déchets contenus dans la poubelle (12).

3. Système d'enlèvement selon la revendication 2, caractérisé en ce que le code (25) d'identification de l'utilisateur contient en même temps des données sur les dimensions de la poubelle (12) considérée.

4. Système d'enlèvement selon la revendication 2 ou 3, caractérisé en ce que le code (25) d'identification est fixé sur la face extérieure de la poubelle (12), qui est dirigée vers un dispositif élévateur et basculeur (16) porté par le véhicule (11) d'enlèvement des déchets, et le lecteur (36) est monté sur un bras (28) du dispositif élévateur et basculeur (16) ou derrière ce bras (28), sur le véhicule d'enlèvement des déchets, de telle manière que le code (25) d'identification et le lecteur (36) soient disposés face à face lorsque la poubelle (12) est saisie et tenue par le dispositif élévateur et basculeur (16).

5. Système d'enlèvement selon l'une au moins des revendications 2 à 4, caractérisé en ce que l'appareil ou chaque appareil de mesure (41) est disposé à une hauteur qui correspond au bord supérieur du véhicule (11) d'enlèvement des déchets.

6. Système d'enlèvement selon l'une au moins des revendications 2 à 5, caractérisé en ce que l'unité (14) de traitement des données est connectée à un appareil de commande (15) qui, après avoir détecté et mémorisé les données émises par l'appareil de mesure (41) et par le lecteur (36), commande un entraînement (31) du dispositif élévateur et basculeur (16).

7. Système d'enlèvement selon l'une au moins des revendications 2 à 6, caractérisé en ce que l'appareil de mesure (41) est un appareil de mesure optique, et de préférence un appareil de mesure des distances par infrarouge.

8. Système d'enlèvement selon l'une au moins des revendications 2 à 6, caractérisé en ce que l'appareil de mesure (41) est un appareil de mesure acoustique, et de préférence un appareil de mesure des distances par ultrasons.

9. Système d'enlèvement selon l'une au moins des revendications 2 à 8, caractérisé en ce que le dispositif de mesure comprend au moins deux appareils de mesure (41) agencés avec un certain écartement latéral, et en ce que la poubelle (12) est divisée en compartiments (84, 85) au moyen d'au moins une cloison verticale (83), un appareil de mesure (41) étant alors associé à chaque compartiment, en ce que, par ailleurs, le code d'identification (25) comprend des données concernant le dimensionnement du compartiment ainsi que des données de commande pour les appareils de mesure (41), et en ce que l'ouverture de remplissage du véhicule (11) d'enlèvement des déchets est subdivisée en correspondance avec les ouvertures de vidange des compartiments de la poubelle (12), de façon qu'une chambre de remplissage séparée du conteneur à déchets du véhicule corresponde respectivement à chaque ouverture partielle de remplissage du véhicule (11) d'enlèvement des déchets.

10. Système d'enlèvement selon l'une au moins des revendications 2 à 8, caractérisé en ce que le dispositif de mesure comprend un appareil de mesure réglable (41), et la poubelle (12) est subdivisée en compartiments (84, 85) au moyen d'au moins une cloison verticale (83), l'appareil de mesure (41) pouvant être associé à un compartiment (84, 85) après un autre, en ce que, par ailleurs, le code d'identification (25) comprend des données concernant le dimensionnement des compartiments ainsi que des données de commande pour l'appareil de mesure (41), et en ce que l'ouverture de remplissage du véhicule (11) d'enlèvement des déchets est subdivisée en correspondance avec les ouvertures de vidange des compartiments de la poubelle (12), de façon qu'une chambre de remplissage séparée du conteneur à déchets du véhicule corresponde respectivement à chaque ouverture partielle de remplissage du véhicule (11) d'enlèvement des déchets.

11. Système d'enlèvement selon l'une au moins des revendications 2 à 8, caractérisé en ce que le véhicule (11) d'enlèvement des déchets est constitué par un véhicule à compartiments multiples, avec un nombre d'ouvertures de remplissage pouvant être fermées par des volets commandés ou équivalents, qui correspond au nombre des compartiments, et en ce que le code (25) d'identification de l'utilisateur présente des données de commande pour l'un des volets ou équivalents.

12. Système d'enlèvement selon l'une au moins des revendications 2 à 11, caractérisé en ce que le code (25) d'identification de l'utilisateur peut être masqué par un cache (45).

13. Système d'enlèvement selon la revendication 12, caractérisé en ce que le cache (45) présente une fenêtre pour permettre de lire le code (25) d'identification de l'utilisateur.

14. Système d'enlèvement selon la revendication 12 ou 13, caractérisé en ce que le cache (45) peut être verrouillé et/ou obturé.

15. Système d'enlèvement selon la revendication 14, caractérisé en ce que le dispositif de verrouillage (51) associé au cache (45) constitue en même temps un dispositif de verrouillage pour le couvercle (22) de la poubelle (12).

16. Système d'enlèvement selon la revendication 15, cractérisé en ce que le dispositif de verrouillage (51) comporte un coulisseau de verrouillage (53) qu'on peut amener à la position de libération par coulissement sensiblement horizontal, à l'encontre d'au moins un ressort de rappel (52), et qui, dans sa position de travail, accroche par le haut un ergot de verrouillage (59) appartenant à un verrou de fermeture (61) ou équivalent, fixé au couvercle (22) de la poubelle (12), et qui est accouplé, par un dispositif (76, 77) à renvoi de force, au cache (45) qui peut être amené à la position de dégagement par un mouvement de coulissement dans une direction sensiblement verticale, à l'encontre d'au moins un ressort de rappel (78, 79).

17. Système d'enlèvement selon la revendication 16, caractérisé en ce que le dispositif à renvoi de force est composé d'une surface oblique (77) ou d'un bord oblique du coulisseau (53) de verrouillage, et d'un organe d'attaque (76) solidaire du cache (45).

18. Système d'enlèvement selon l'une au moins des revendications 12 à 17, caractérisé en ce que le cache (45) comprend au moins un ergot d'entraînement (80, 81) ou élément équivalent, qui coopère avec un organe complémentaire (82) porté par le peigne récepteur (48) du dispositif élévateur et basculeur (16) du véhicule (11) d'enlèvement des déchets, de telle manière que la position relevée du cache (45) soit associée à une poubelle (12) entièrement accrochée.

19. Système d'enlèvement selon l'une au moins des revendications 12 à 18, caractérisé en ce que le coulisseau de verrouillage (53) peut être bloqué dans sa position inactive au moyen d'un organe d'arrêt (66) qui peut se déplacer, notamment dans une direction (64) sensiblement verticale.

20. Système d'enlèvement selon l'une au moins des revendications 12 à 19, caractérisé en ce que le coulisseau de verrouillage (53) peut être bloqué dans sa position libérée au moyen d'une serrure à organe de blocage, notamment au moyen d'un cylindre de serrure (72) muni d'un mentonnet de fermeture et fixé à une plaque de recouvrement (75) placée frontalement.

21. Système d'enlèvement selon l'une au moins des revendications 2 à 20, caractérisé en ce que l'unité (14) de traitement des données et/ou l'unité (15) de commande est ou sont logée(s) dans la cabine du conducteur du véhicule (11) d'enlèvement des déchets.
